# EUROPEAN PATENT SPECIFICATION

(11) **EP 3 313 217 B1**
(45) Date of publication and mention of the grant of the patent: **22.09.2021**
(21) Application number: 16738688.7
(22) Date of filing: 24.06.2016
(51) Int. Cl.: A24F 40/40, A24F 40/20, A24F 40/46

(54) **APPARATUS FOR HEATING SMOKABLE MATERIAL**
VORRICHTUNG ZUM ERHITZEN EINES RAUCHBAREN MATERIALS
APPAREIL POUR CHAUFFER UNE SUBSTANCE À FUMER

(30) Priority: 26.06.2015 US 201562185227 P
(43) Date of publication of application: 02.05.2018
(73) Proprietor: Nicoventures Trading Limited, London WC2R 3LA (GB)
(72) Inventor: NAUGHTON, Michael, Oconomowoc, Wisconsin 53066 (US); THORSEN, Mitchel, Madison, Wisconsin 53718 (US)
(74) Representative: Dehns
(86) International application number: PCT/EP2016/064756
(87) International publication number: WO 2016/207407

(56) References cited:
- WO-A1-00/27232
- WO-A2-2013/160112
- DE-A1- 19 854 009

## Description

### Cross Reference to Related Application

This application claims the benefit of US provisional patent application no. 62/185,227, filed on June 26, 2015.

### Technical Field

The present invention relates to apparatus arranged to heat smokable material.

### Background

Articles such as cigarettes, cigars and the like burn tobacco during use to create tobacco smoke. Attempts have been made to provide alternatives to these articles, which burn tobacco, by creating products that release compounds without burning. Examples of such products are so-called heat-not-burn products, also known as tobacco heating products or tobacco heating devices, which release compounds by heating, but not burning, the material. The material may be for example tobacco or other non-tobacco products or a combination, such as a blended mix, which may or may not contain nicotine.

DE19854009 A1 discloses a smoking article to provide an inhalable aerosol to a user. A housing comprises a chamber for heating a substrate. One end of the housing has an opening for receiving the substrate, and the opposite end of the housing has a mouthpiece.

### Summary

According to the present invention, there is provided an apparatus arranged to heat smokable material to volatilise at least one component of said smokable material, the apparatus comprising:
a housing;
the housing having a first opening at a first end through which smokable material can pass so as to be received within and removed from the apparatus in use;
the housing having a second opening at a second end opposed from the first end; the housing having a chamber between the first and second openings;
at least one heater arranged within the housing for heating smokable material removably received within the chamber in use;
whereby a user can access the chamber through at least the second opening to clean within the apparatus.

This access through at least the second opening particularly enables a user to clean within the chamber and optionally within the heater at the second end. In certain examples, the user is easily able to clean through substantially the whole of the chamber.

In an exemplary embodiment, the apparatus comprises a door for selectively covering the second opening, the door being movable between a first position in which the second opening is closed by the door and a second position in which the second opening is open. In an exemplary embodiment, the door is connected to the housing by a hinge.

In an exemplary embodiment, the housing is provided by a chassis and a first side panel and a second side panel, the first and second side panels being fixable to the chassis, the first and side panels being arranged to secure the door when the first and second side panels are fixed to the chassis. In the case of for example a hinged door, the side panels may retain a pivot pin of the door in position.

In another exemplary embodiment, the door is slidably connected to the housing so that the door can be slid between the first position and the second position.

In an exemplary embodiment, the chamber has a region of reduced internal diameter towards the second end to provide a stop for smokable material passed through the first opening in use. In use, this helps locate the smokable material at a predetermined position within the chamber.

According to the invention, the apparatus comprises a hollow tube located within the chamber at the second end and the hollow tube at the second end provides a region of reduced internal diameter towards the second end to provide a stop for smokable material passed through the first opening in use. In an exemplary embodiment, the hollow tube at the second end is arranged to support the heater at the second end. Thus, in this particular embodiment, the hollow tube both helps locate the smokable material at a predetermined position within the chamber and supports the heater at the second end.

In an exemplary embodiment, the apparatus comprises a hollow tube located within the chamber at the first end, the hollow tube at the first end being arranged to support the heater at the first end.

In an exemplary embodiment, the heater has a hollow interior and the chamber is defined at least in part by the hollow interior of the heater which receives smokable material in use.

In an exemplary embodiment, the heater is formed of plural heating elements.

In an exemplary embodiment, the apparatus comprises a heat insulator surrounding the heater for reducing heat loss from the heater to the exterior of the apparatus.

### Brief Description of the Drawings

Embodiments of the invention will now be described, by way of example only, with reference to the accompanying drawings, in which:
Figure 1 shows a perspective view of an example of an apparatus for heating a smokable material;
Figure 2 shows a view from one end of the apparatus of Figure 1;
Figure 3 shows a view from the other end of the apparatus of Figure 1;
Figure 4 shows a lateral cross-sectional view of the apparatus of Figure 1 with smokable material inserted;
Figure 5 shows a lateral cross-sectional view of the apparatus of Figure 1 with no smokable material inserted;
Figure 6 shows a perspective view of the apparatus of Figure 1 with a side panel removed;
Figure 7 shows a perspective view of a hollow tube component of the apparatus of Figure 1; and
Figure 8 shows a perspective view of the apparatus of Figure 1 with a door open at an end.

### Detailed Description

As used herein, the term "smokable material" includes materials that provide volatilised components upon heating, typically in the form of an aerosol. "Smokable material" includes any tobacco-containing material and may, for example, include one or more of tobacco, tobacco derivatives, expanded tobacco, reconstituted tobacco or tobacco substitutes. "Smokable material" also may include other, non-tobacco, products, which, depending on the product, may or may not contain nicotine. "Smokable material" may for example be in the form of a solid, a liquid, a gel or a wax or the like. "Smokable material" may for example also be a combination or a blend of materials.

Apparatus is known that heats smokable material to volatilise at least one component of the smokable material, typically to form an aerosol which can be inhaled, without burning or combusting the smokable material. Such apparatus is sometimes described as a "heat-not-burn" apparatus or a "tobacco heating product" or "tobacco heating device" or similar. Similarly, there are also so-called e-cigarette devices, which typically vaporise a smokable material in the form of a liquid, which may or may not contain nicotine. The smokable material may be in the form of or provided as part of a rod, cartridge or cassette or the like which can be inserted into the apparatus. A heater for heating and volatilising the smokable material may be provided as a "permanent" part of the apparatus or may be provided as part of the smoking article or consumable which is discarded and replaced after use. A "smoking article" in this context is a device or article or other component that includes or contains in use the smokable material, which in use is heated to volatilise the smokable material, and optionally other components.

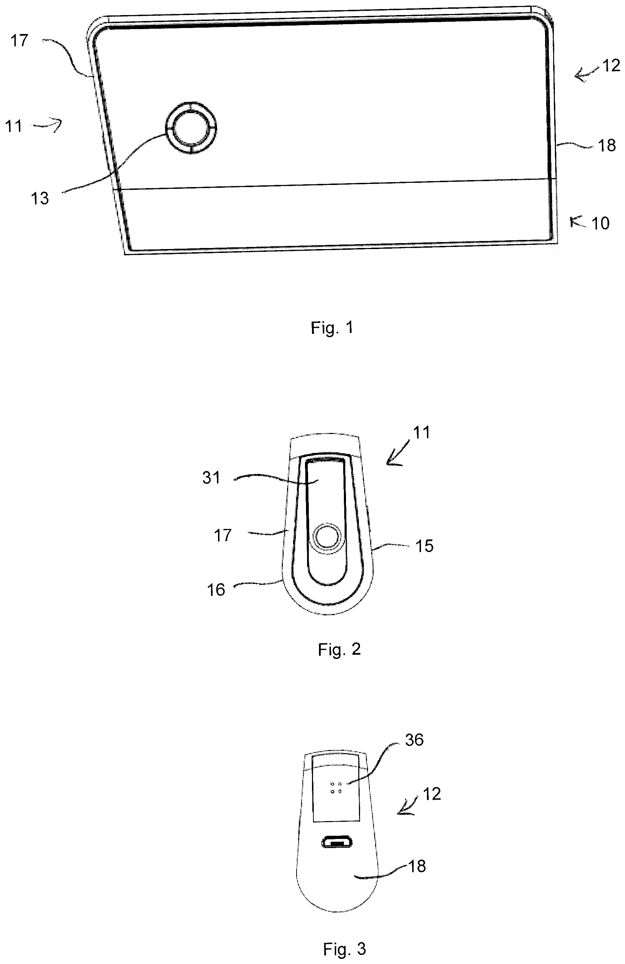

Referring to Figures 1 to 3, there are shown respectively a side view, a first end view and a second end view of an example of an apparatus 10 arranged to heat smokable material to volatilise at least one component of said smokable material, typically to form an aerosol which can be inhaled. The apparatus 10 is a heating apparatus 10 which releases compounds by heating, but not burning, the smokable material. The first end 11 is sometimes referred to herein as the mouth end 11 and the second end 12 is sometimes referred to herein as the distal end 12. The apparatus 10 has an on/off button 13 to allow the apparatus 10 as a whole to be switched on and off as desired by a user.

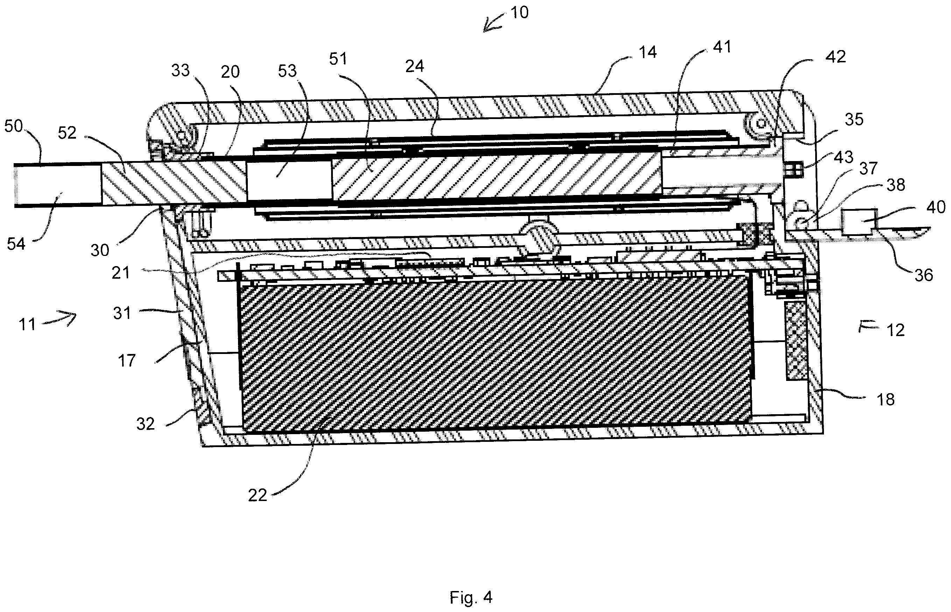

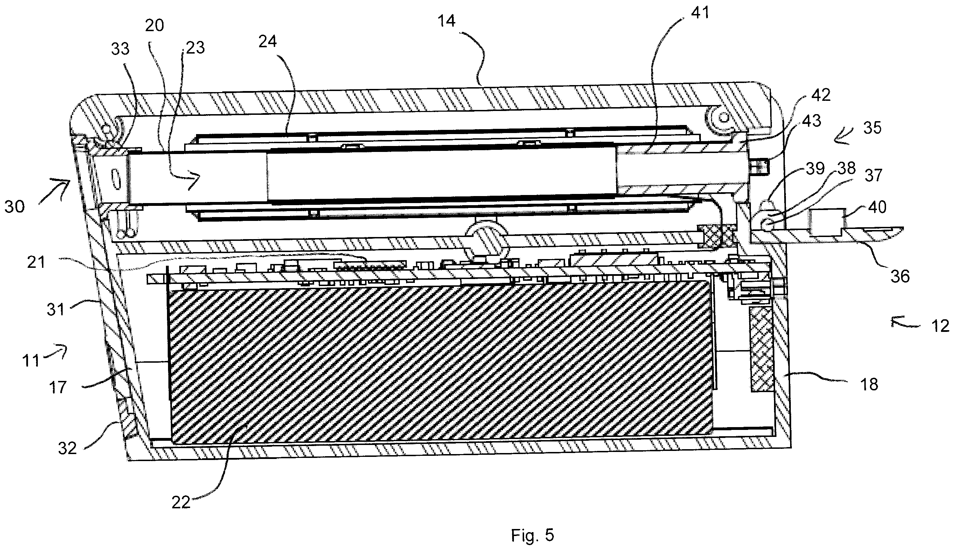

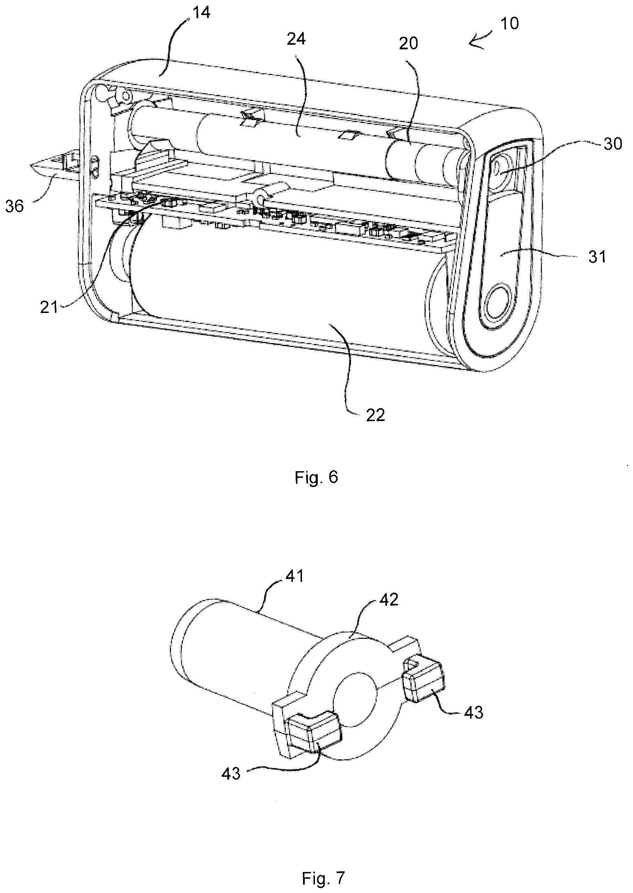

Referring additionally to the cross-sectional views of Figures 4 and 5 and the perspective view of Figure 6, the apparatus 10 provides a housing for locating and protecting various internal components of the apparatus 10. In the example shown, the apparatus 10 is formed of one or more "chassis" parts and one or more side panels. In the particular example shown here, the apparatus 10 has one main chassis 14 and two side panels 15, 16. During assembly of the apparatus 10, various internal components of the apparatus 10 are located in and/or fixed to the chassis 14 and the one or more side panels 15, 16 are then fixed to the chassis 14. The one or more side panels 15, 16 may be removably fixed to the chassis 14, to permit easy access to the interior of the apparatus 10, or may be "permanently" fixed to the chassis 14, for example to deter a user from accessing the interior of the apparatus 10. In the particular example shown here, the chassis 14 provides at least in part the front wall 17 of the apparatus 10 at the first or mouth end 11 and also provides at least in part the rear wall 18 of the apparatus at the second or distal end 12. In an example the chassis 14 and two side panels 15, 16 are made of a plastics material, including for example glass-filled nylon formed by injection moulding, though other materials and other manufacturing processes may be used.

The chassis 14 has located or fixed therein a heater 20, control circuitry 21 and a power source 22. In this example, the heater 20, the control circuitry 21 and the power source 22 are laterally adjacent (that is, adjacent when viewed from an end, such as in the views of Figures 2 and 3), with the control circuitry 21 being located generally between the heater 20 and the power source 22, though other locations are possible. The control circuitry 21 may include a controller, such as a microprocessor arrangement, configured and arranged to control the heating of the smokable material as discussed further below. The power source 22 may be for example a battery, which may be a rechargeable battery or a non-rechargeable battery. Examples of suitable batteries include for example a lithium-ion battery, a nickel battery (such as a nickelcadmium battery), an alkaline battery and/ or the like. The battery 22 is electrically coupled to the heater 20 to supply electrical power when required and under control of the control circuitry 21 to heat the smokable material (as discussed, to volatilise the smokable material without causing the smokable material to burn). An advantage of locating the power source 22 laterally adjacent to the heater 20 is that a physically large power source 22 may be used without causing the apparatus 20 as a whole to be unduly lengthy. As will be understood, in general a physically large power source 22 has a higher capacity (that is, the total electrical energy that can be supplied, often measured in Amp-hours or the like) and thus the battery life for the apparatus 10 can be longer.

In one example, the heater 20 is generally in the form of a hollow cylindrical tube, having a hollow interior heating chamber 23 into which smokable material is inserted for heating in use. Different arrangements for the heater 20 are possible. For example, the heater 20 may be formed of a single heating element or may be formed of plural heating elements aligned along the longitudinal axis of the heater 20. The or each heating element may be annular or tubular, or at least part-annular or part-tubular around its circumference. In an example, the or each heating element may be a thin film heater. In another example, the or each heating element may be made of a ceramics material. Examples of suitable ceramics materials include alumina and aluminium nitride and silicon nitride ceramics, which may be laminated and sintered. Other heating arrangements are possible, including for example inductive heating, infrared heater elements, which heat by emitting infrared radiation, or resistive heating elements formed by for example a resistive electrical winding. In one particular example, the heater 20 is formed of a polyimide substrate on which is formed one or more heating elements and which is supported by a stainless steel support tube. The heater 20 is dimensioned so that substantially the whole of the smokable material when inserted is located within the heating element(s) of the heater 20 so that substantially the whole of the smokable material is heated in use. The or each heating element may be arranged so that selected zones of the smokable material can be independently heated, for example in turn (over time) or together (simultaneously) as desired.

The heater 20 in this example is surrounded along at least part of its length by a thermal insulator 24. The insulator 24 helps to reduce heat passing from the heater 20 to the exterior of the apparatus 10. This helps to keep down the power requirements for the heater 20 as it reduces heat losses generally. The insulator 24 also helps to keep the exterior of the apparatus 10 cool during operation of the heater 20. In one example, the insulator 24 may be a double-walled sleeve which provides a low pressure region between the two walls of the sleeve. That is, the insulator 24 may be for example a "vacuum" tube, i.e. a tube that has been at least partially evacuated so as to minimise heat transfer by conduction and/or convection. Other arrangements for the insulator 24 are possible, including using heat insulating materials, including for example a suitable foam-type material, in addition to or instead of a double-walled sleeve.

The front wall 17 of the chassis 14 has an opening 30 at the mouth end 11 of the apparatus 10 through which in use smokable material may be passed to be inserted into the apparatus 10 and removed from the apparatus 10 by a user. A door 31 is provided at the mouth end 11. The door 31 can be opened so as to allow smokable material to be passed through the opening 30 to be inserted into and removed from the apparatus 10 during periods of use and can be closed to close the opening 30 to keep the interior of the apparatus 10 clean during periods of non-use and avoiding damage to the interior of the apparatus 10. The door 31 in this example is a sliding door, which can be slid up and down to close and open the opening 30. In other examples, the door 31 may be a hinged door or other arrangements may be provided. The door 31 in this example is provided in conjunction with a mouthpiece component 32 which is fixed to the front wall 17 of the chassis 14 (for example by gluing) during manufacture of the apparatus 10 and which captures the door 31 to allow the door 31 to slide open and closed. The mouthpiece component 32 and door 31 may be formed of for example a plastics material, including for example glass-filled nylon. The mouthpiece component 32 in this example has an inwardly facing collar 33 which projects through the opening 30 into the interior of the apparatus 10 and which can assist in supporting and locating the heater 20, as will be discussed further below. Referring here particularly to Figure 4, this shows a rod 50 which includes smokable material 51 inserted partly through the front opening 30 so that (at least) the smokable material 51 is located within the heating chamber 23 of the heater 20 so that the smokable material 51 is heated when the heater 20 is energised.

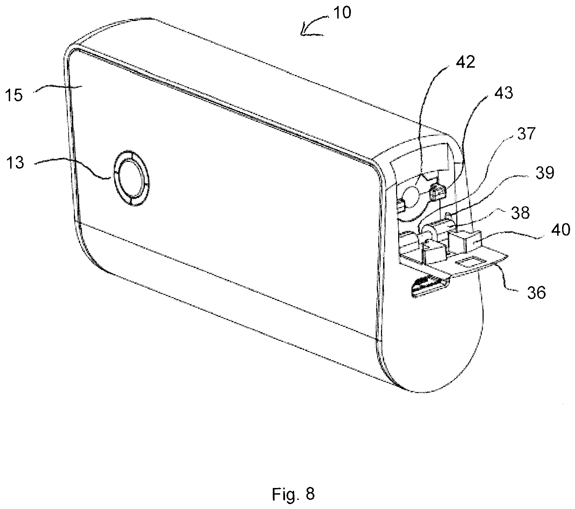

The rear wall 18 of the chassis 14 has an opening 35 at the distal end 12 of the apparatus 10. A door 36 is provided at the distal end 12. The door 36 can be opened so as to allow access to the opening 35 at the distal end 12 and can be closed to close the opening 35 at the distal end 12. The door 36 at the distal end 12 in this example is a hinged door. In other examples, the door 36 may be a sliding door or other arrangements may be provided. In the case that the door 36 at the distal end 12 is a hinged door, the hinge may be provided as a "living hinge". More preferably, the door 36 is a separate component and the hinge for the door 36 is a barrel hinge. In that case, a pivot pin 37 is located within one or more hollow hinge barrels 38 provided integrally with or fixed to the door 36 and also within one or more recesses or hollow clips 39 provided integrally with or fixed to the chassis 14 in the region of the opening 35 to hingedly fix the door 36 to the chassis 14. The door 36 has one or more clips or projections 40 or the like which resiliently engage with the surrounding portion(s) of the chassis 14 or with clips which may be provided by a separate hollow tube 41 discussed further below to clip the door 36 in its closed position. The door 36 can be seen most clearly in Figure 8. The door 36 may be formed of for example a plastics material, including for example ABS (acrylonitrile butadiene styrene).

In the assembled apparatus 10, the heater 20 generally in the form of a hollow cylindrical tube is located within the chassis 14 so that one end of the hollow tube is in fluid communication with the opening 30 at the mouth end 11 and the other end of the hollow tube is in communication with the opening 35 at the distal end.

In use, the user closes the door 36 at the distal end 12 to close the opening 35 at the distal end 12 and opens the door 30 at the mouth end 11 to open the opening 30 at the mouth end 11. The user then inserts the rod 50 that includes smokable material 51 through the opening 30 at the mouth end 11 into the heating chamber 23 of the heater 20, operates the apparatus 10 to heat the smokable material 51 to generate an aerosol for inhaling as desired, and then removes the rod 50 with used smokable material 51 from the apparatus 10 through the opening 30 at the mouth end 11. Importantly, the user can open the door 36 at the distal end 12 to open the opening 35 at the distal end 12 after the apparatus 10 has been used. The opening 35 at the distal end 12 provides access for the user to the interior of the apparatus 10, particularly in the region of the opening 35 at the distal end 12. This allows the user to clean within the interior of the apparatus 10 in the region of the opening 35 at the distal end 12 when necessary and as desired. This access at the distal end 12 particularly enables the user to clean within the heater 20 and the heating chamber 23 at the distal end 12. Indeed, as the heater 20 is located between the openings 30, 35 at the mouth end 11 and the distal end 12 respectively, and the hollow heater 20 in effect defines a straight through-bore through the whole apparatus 10 between the mouth end opening 30 and the distal end opening 35, the user is easily able to clean through substantially the whole of the interior hollow heating chamber 23. For this, the user can access the heating chamber 23 via either opening 30, 35 at choice. The user may use one or more various cleaning devices for this purpose, including for example a classic pipe cleaner or a brush or the like.

In an example, the heating chamber 23 has a region of reduced internal diameter towards the distal end 12. This provides an end stop for smokable material passed through the first opening 30 at the mouth end 11, to prevent the smokable material being passed straight out through the second opening 35 at the distal end 12.

In the example shown, this region of reduced internal diameter is provided by a hollow tube 41 which is located within the end of the heating chamber 23 towards the distal end 12. An example of the hollow tube 41 is shown most clearly in Figure 7. The hollow tube 41 in this example has an outwardly extending head or flange 42. The hollow tube 41 may be formed of for example a plastics material, including for example polyether ether ketone (PEEK). During manufacture of the apparatus 10, the hollow tube 41 is inserted from the outside into the opening 35 at the distal end 12, with the head or flange 42 providing a stop against the chassis 14 to locate the hollow tube 41 at the predetermined position. The hollow tube 41 may be fixed in place, for example by glue. The heater 20 is located within the chassis 14, with the hollow tube 41 entering the distal end of the interior chamber 23 of the heater 20. Accordingly, in this case, the hollow tube 41 provides the region of reduced internal diameter within the heating chamber 23 which acts as a stop for the smokable material inserted into the interior chamber 23 of the heater 20, and also supports and locates the heater 20 within the apparatus 10 at the distal end 12. Discussing further the support and location of the heater 20 within the apparatus 10, the inwardly facing collar 33 of the mouthpiece component 32 at the mouth end 11 in the example described above similarly projects into the mouth end of the interior chamber 23 of the heater 20, which therefore supports and locates the heater 20 within the apparatus 10 at the mouth end 11.

In this example, as shown in for example Figure 7, the head or flange 42 of the hollow tube 41 has opposed inwardly facing projections or clips 43. The clips or projections 40 of the door 36 respectively resiliently engage with the projections or clips 43 of the head or flange 42 of the hollow tube 41 when the door 36 is in the closed position, to retain the door 36 in the closed position.

Referring again particularly to Figure 4, in one example the smokable material is provided as part of a consumable in the form of a cylindrical rod 50 which has or contains smokable material 51 at one end (which is the distal end, inserted into the chassis 14 in use). In this example, the rod 50 has at the other end (which is the mouth end) a mouthpiece assembly which includes one or more of a filter for filtering aerosol and/or a cooling element 52 for cooling aerosol. The filter/cooling element 52 is spaced from the smokable material by a space 53 and is also spaced from the mouth end by a further space 54.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims.

## Claims

1. An apparatus (10) arranged to heat smokable material (51) to volatilise at least one component of said smokable material (51), the apparatus (10) comprising:
a housing;
the housing having a first opening (30) at a first end (11) through which smokable material (51) can pass so as to be received within and removed from the apparatus (10) in use;
the housing having a second opening (35) at a second end (12) opposed from the first end (11);
the housing having a chamber (23) between the first and second openings (30, 35);
at least one heater (20) arranged within the housing for heating smokable material (51) removably received within the chamber (23) in use; and
a hollow tube (41) located within the chamber (23) at the second end (12) to provide a region of reduced internal diameter towards the second end (12) to provide a stop for smokable material (51) passed through the first opening (30) in use;
whereby a user can access the chamber (23) through at least the second opening (35) to clean within the apparatus (10),
wherein the first end (11) is a mouth end and the second (12) end is a distal end.

2. An apparatus (10) according to claim 1, comprising a door (36) for selectively covering the second opening (35), the door (36) being movable between a first position in which the second opening (35) is closed by the door (36) and a second position in which the second opening (35) is open.

3. An apparatus (10) according to claim 2, wherein the door (36) is connected to the housing by a hinge.

4. An apparatus (10) according to claim 2 or claim 3, wherein the housing is provided by a chassis (14) and a first side panel (15) and a second side panel (16), the first and second side panels (15, 16) being fixable to the chassis (14), the first and side panels (15, 16) being arranged to secure the door (36) when the first and second side panels (15, 16) arc fixed to the chassis (14).

5. An apparatus (10) according to claim 2, wherein the door (36) is slidably connected to the housing so that the door (36) can be slid between the first position and the second position.

6. An apparatus (10) according any of claims 1 to 5, wherein the hollow tube (41) at the second end (12) is arranged to support the heater (20) at the second end (12).

7. An apparatus (10) according to any of claims 1 to 6, comprising a hollow tube located within the chamber (23) at the first end (11), the hollow tube at the first end (11) being arranged to support the heater (20) at the first end (11).

8. An apparatus (10) according to any of claims 1 to 7, wherein the heater (20) has a hollow interior and the chamber (23) is defined at least in part by the hollow interior of the heater (20) which receives smokable material (51) in use.

9. An apparatus (10) according to any of claims 1 to 8, wherein the heater (20) is formed of plural heating elements.

10. An apparatus (10) according to any of claims 1 to 9, comprising a heat insulator (24) surrounding the heater (20) for reducing heat loss from the heater (20) to the exterior of the apparatus (10).

## Patentansprüche

1. Einrichtung (10), die angeordnet ist, um rauchbares Material (51) zu erhitzen, um mindestens einen Bestandteil des rauchbaren Materials (51) zu verflüchtigen, wobei die Einrichtung (10) Folgendes umfasst:
ein Gehäuse;
wobei das Gehäuse eine erste Öffnung (30) an einem ersten Ende (11) aufweist, durch die rauchbares Material (51) so durchgehen kann, dass es in Verwendung darin aufgenommen und aus der Einrichtung (10) entfernt werden kann;
wobei das Gehäuse eine zweite Öffnung (35) an einem zweiten Ende (12) gegenüber dem ersten Ende (11) aufweist;
wobei das Gehäuse zwischen der ersten und der zweiten Öffnung (30, 35) eine Kammer (23) aufweist;
mindestens eine Heizvorrichtung (20), die innerhalb des Gehäuses zum Erhitzen von rauchbarem Material (51) angeordnet ist und in Verwendung innerhalb der Kammer (23) herausnehmbar aufgenommen ist; und
ein Hohlrohr (41), das innerhalb der Kammer (23) an dem zweiten Ende (12) positioniert ist, um einen Bereich mit verringertem Innendurchmesser in Richtung des zweiten Endes (12) bereitzustellen, um einen Stopp für rauchbares Material (51) bereitzustellen, das in Verwendung durch die erste Öffnung (30) durchgeht;
wodurch ein Benutzer durch mindestens die zweite Öffnung (35) Zugang zu der Kammer (23) erhalten kann, um innerhalb der Einrichtung (10) zu reinigen,
wobei das erste Ende (11) ein Mundende und das zweite (12) Ende ein distales Ende ist.

2. Einrichtung (10) nach Anspruch 1, umfassend eine Klappe (36) zum selektiven Abdecken der zweiten Öffnung (35), wobei die Klappe (36) zwischen einer ersten Position, in der die zweite Öffnung (35) durch die Klappe (36) verschlossen ist, und einer zweiten Position, in der die zweite Öffnung (35) offen ist, bewegbar ist.

3. Einrichtung (10) nach Anspruch 2, wobei die Klappe (36) über ein Scharnier mit dem Gehäuse verbunden ist.

4. Einrichtung (10) nach Anspruch 2 oder Anspruch 3, wobei das Gehäuse mit einem Chassis (14) und einer ersten Seitenwand (15) und einer zweiten Seitenwand (16) bereitgestellt ist, wobei die erste und die zweite Seitenwand (15, 16) an dem Chassis (14) fixierbar sind, wobei die erste und die zweite Seitenwand (15, 16) angeordnet sind, um die Klappe (36) zu sichern, wenn die erste und die zweite Seitenwand (15, 16) an dem Chassis (14) gesichert sind.

5. Einrichtung (10) nach Anspruch 2, wobei die Klappe (36) verschiebbar mit dem Gehäuse so verbunden ist, dass die Klappe (36) zwischen der ersten Position und der zweiten Position verschoben werden kann.

6. Einrichtung (10) nach einem der Ansprüche 1 bis 5, wobei das Hohlrohr (41) an dem zweiten Ende (12) angeordnet ist, um die Heizvorrichtung (20) an dem zweiten Ende (12) zu stützen.

7. Einrichtung (10) nach einem der Ansprüche 1 bis 6, umfassend ein Hohlrohr, das innerhalb der Kammer (23) an dem ersten Ende (11) positioniert ist, wobei das Hohlrohr an dem ersten Ende (11) angeordnet ist, um die Heizvorrichtung (20) an dem ersten Ende (11) zu stützen.

8. Einrichtung (10) nach einem der Ansprüche 1 bis 7, wobei die Heizvorrichtung (20) einen hohlen Innenraum aufweist und die Kammer (23) mindestens teilweise durch den hohlen Innenraum der Heizvorrichtung (20), die in Verwendung rauchbares Material (51) aufnimmt, definiert ist.

9. Einrichtung (10) nach einem der Ansprüche 1 bis 8, wobei die Heizvorrichtung (20) aus mehreren Heizelementen gebildet ist.

10. Einrichtung (10) nach einem der Ansprüche 1 bis 9, umfassend einen Wärmedämmstoff (24), der die Heizvorrichtung (20) umgibt, um Wärmeverlust von der Heizvorrichtung (20) an das Äußere der Einrichtung (10) zu verringern.

## Revendications

1. Appareil (10) agencé de façon à chauffer une substance à fumer (51) pour volatiliser au moins un composant de ladite substance à fumer (51), l'appareil (10) comprenant :
un logement ;
le logement présentant une première ouverture (30) au niveau d'une première extrémité (11) à travers laquelle peut passer une substance à fumer (51) pour qu'elle soit reçue à l'intérieur et retirée à partir de l'appareil (10) lors d'une utilisation ;
le logement présentant une seconde ouverture (35) au niveau d'une seconde extrémité (12) opposée à la première extrémité (11) ;
le logement présentant une chambre (23) entre les première et seconde ouvertures (30, 35) ;
au moins un dispositif de chauffage (20) agencé à l'intérieur du logement pour chauffer une substance à fumer (51) reçue de manière retirable à l'intérieur de la chambre (23) lors d'une utilisation ; et
un tube creux (41) situé à l'intérieur de la chambre (23) au niveau de la seconde extrémité (12) pour fournir une région de diamètre interne réduit vers la seconde extrémité (12) pour fournir un arrêt pour une substance à fumer (51) ayant traversé la première ouverture (30) lors d'une utilisation ;
selon lequel un utilisateur peut accéder à la chambre (23) par au moins la seconde ouverture (35) pour nettoyer l'intérieur de l'appareil (10),
dans lequel la première extrémité (11) une extrémité côté bouche et la seconde extrémité (12) est une extrémité distale.

2. Appareil (10) selon la revendication 1, comprenant une porte (36) pour recouvrir sélectivement la seconde ouverture (35), la porte (36) étant mobile entre une première position dans laquelle la seconde ouverture (35) est fermée par la porte (36) et une seconde position dans laquelle la seconde ouverture (35) est ouverte.

3. Appareil (10) selon la revendication 2, dans lequel la porte (36) est reliée au logement par une charnière.

4. Appareil (10) selon la revendication 2 ou la revendication 3, dans lequel le logement est fourni par un châssis (14) et un premier panneau latéral (15) et un second panneau latéral (16), les premier et second panneaux latéraux (15, 16) pouvant être fixés au châssis (14), les premier et second panneaux latéraux (15, 16) étant agencés pour fixer la porte (36) quand les premier et second panneaux latéraux (15, 16) sont fixés au châssis (14).

5. Appareil (10) selon la revendication 2, dans lequel la porte (36) est reliée de manière coulissante au logement de sorte que la porte (36) peut coulisser entre la première position et la seconde position.

6. Appareil (10) selon l'une quelconque des revendications 1 à 5, dans lequel le tube creux (41) au niveau de la seconde extrémité (12) est agencé pour supporter le dispositif de chauffage (20) au niveau de la seconde extrémité (12).

7. Appareil (10) selon l'une quelconque des revendications 1 à 6, comprenant un tube creux situé à l'intérieur de la chambre (23) au niveau de la première extrémité (11), le tube creux au niveau de la première extrémité (11) étant agencé pour supporter le dispositif de chauffage (20) au niveau de la première extrémité (11).

8. Appareil (10) selon l'une quelconque des revendications 1 à 7, dans lequel le dispositif de chauffage (20) présente un intérieur creux et la chambre (23) est définie au moins en partie par l'intérieur creux du dispositif de chauffage (20) qui reçoit une substance à fumer (51) lors d'une utilisation.

9. Appareil (10) selon l'une quelconque des revendications 1 à 8, dans lequel le dispositif de chauffage (20) est formé de plusieurs éléments chauffants.

10. Appareil (10) selon l'une quelconque des revendications 1 à 9, comprenant un isolant thermique (24) entourant le dispositif de chauffage (20) pour réduire la perte de chaleur à partir du dispositif de chauffage (20) vers l'extérieur de l'appareil (10).
